# EUROPEAN PATENT APPLICATION

(11) **EP 4 801 007 A1**
(43) Date of publication of application: **02.09.2026**
(21) Application number: 25160876.6
(22) Date of filing: 28.02.2025
(51) Int. Cl.: H04L 61/5007, H04L 61/5014, H04L 61/5084

(54) **METHOD, COMPUTER PROGRAM, AND APPARATUS FOR USING DYNAMIC ADDRESSING FOR MOBILE DEVICES IN A TELECOMMUNICATION SYSTEM**

(71) Applicant: Deutsche Telekom AG, 53113 Bonn (DE)
(72) Inventor: BAYER, Nico, 61231 Bad Nauheim (DE); BELSCHNER, Jakob, 60322 Frankfurt/M. (DE); TSAI, Bernard, 65203 Wiesbaden (DE)
(74) Representative: 2SPL Patentanwälte PartG mbB

(57) **Abstract**

Provided are methods, computer programs, and apparatuses for using dynamic addressing for mobile devices in a telecommunication system. The method (10) for using dynamic addressing for mobile devices in a telecommunication system comprises assigning (12) a first address to a mobile device, the first address being from a first group of addresses with a first lower address persistency for provision of a first service with a higher Quality of Service, QoS, requirement. The method (10) further comprises assigning (14) a second address to the mobile device, the second address being from a second group of addresses with a second higher address persistency for provision of a second service with a lower QoS requirement.

## Description

### Field

The present disclosure relates to methods, computer programs, and apparatuses for using dynamic addressing for mobile devices in a telecommunication system, more particularly, but not exclusively to a concept for using address groups of different address persistency for different services in a telecommunication system.

### Background

Dynamic addressing in telecommunication networks refers, for example, to the process of automatically assigning IP (Internet Protocol) addresses to devices as they join the network, which significantly simplifies network management and enhances scalability. This concept is often implemented through protocols like the Dynamic Host Configuration Protocol (DHCP), and it enables devices to receive unique addresses without manual configuration, thereby optimizing the efficient use of the available address space. By dynamically reallocating addresses as devices disconnect and reconnect, networks can adapt to changing demands and ensure continuous connectivity, which is particularly beneficial in environments with high mobility or a fluctuating number of devices. This approach not only reduces administrative overhead but also improves overall network performance and reliability, making it a cornerstone of modern telecommunication infrastructure. This method enhances network scalability and supports mobile connectivity, surpassing the use of static addressing schemes.

In telecommunication networks, a mobility anchor serves as a critical intermediary that enables continuous and seamless connectivity for mobile devices by managing their network sessions as they transition between different access points or sub-networks. Acting as a stable reference point, the mobility anchor maintains the binding between a device's permanent IP address and its temporary location-specific address, thus allowing ongoing communication sessions to persist without interruption during handovers. This centralized management not only minimizes latency and signaling overhead during mobility events but also enhances overall network performance by efficiently coordinating the routing of data packets to the mobile user regardless of their location. Consequently, the implementation of a mobility anchor is fundamental in modern mobile communication architectures, where dynamic network conditions and the need for uninterrupted service are ever-increasing challenges.

Mobility anchors may be provided based on IP address selection. Mobility is a crucial aspect of mobile networks, facilitating the continuous and seamless connectivity of devices as they move across different network areas. A mobility anchor acts as a pivotal element in this context. It ensures that a user's session remains uninterrupted and routing data packets appropriately, even as the user transitions from one cell to another within the network.

In essence, the mobility anchor holds the user's session information and current location within the network, enabling the smooth handover of connections. This anchor point can be in various places within the network architecture, depending on the deployment scenario and the specific needs of the network, such as latency and computational requirements. In mobile cellular networks, for example the User Plane Function (UPF) (in a 5G standalone (SA) network) acts as the mobility anchor for the user plane traffic. The UPF is responsible for handling data forwarding between the user equipment (UE) and the data network (DN). When a user moves across different cells, the UPF (mobility anchor) ensures that the session's IP address remains consistent, preserving the session continuity. By efficiently managing the user's IP session through the mobility anchor, the UPF can deliver seamless connectivity and optimal performance, regardless of the network scenario. In other networks, such as a 4G or 5G non-standalone (NSA) network, the mobility anchor is implemented at a packet data network gateway (PGW).

### Summary

Examples of the present disclosure are based on the finding that addresses can grouped in address groups with different address persistency. Based on a need for a service or end device addresses from the different groups can be selected. Furthermore, multiple addresses from different persistency groups can be assigned to a device at the same time. This enables the device to select an address based on Quality of Service, QoS, and persistency requirements from the addresses assigned. Moreover, it is a further finding that the persistency group for an address can be indicated in the address itself.

Examples provide a method for using dynamic addressing for mobile devices in a telecommunication system. The method comprises assigning a first address to a mobile device, the first address being from a first group of addresses with a first lower address persistency for provision of a first service with a lower Quality of Service, QoS, requirement. The method further comprises assigning a second address to the mobile device, the second address being from a second group of addresses with a second higher address persistency for provision of a second service with a higher QoS requirement. Thereby, different addresses can be used for different persistency requirements.

For example, the first lower address persistency indicates that the first address has to be changed more often than the second address when a mobile device changes between access nodes of the telecommunication system. Hence, the first address may be more suitable for a static device or for services being more tolerant towards address changes (interruptions). The first and second groups of addresses may comprise IPv6 (Internet Protocol version 6) addresses. Thereby, the large address range of IPv6 can be used for address grouping, e.g. even more than two groups may be used. At least in some examples the first and second addresses comprise one or more indicators of the address group the first the second addresses belong to. The indicators enable involved network nodes or entities to directly identify the persistency group of an address from the address itself. For example, the indicator uses one or more digits of the addresses. Using predefined digits is an efficient means for indicating the persistency group as the involved entities can simply demask the digits and read the indicator.

In further examples the method may comprise determining a mobility demand of an application of a mobile device and using addresses from the first and second groups of addresses based on the mobility demand of the application. Hence, static mobile may make use of a lower persistency than a moving mobile, all being dependent on a QoS requirement as well. The method may further comprise assigning one or more addresses of the first group and one or more addresses of the second group of addresses to a mobile device for use of different services with different interruption tolerances. Thereby, the address selection can be done on the mobile side on-the-fly. For example, the method comprises using an address of the first group for a background or non-conversational services and using an address of the second group for a gaming or conversational services.

The method may include updating routing tables of the telecommunication system for mobile devices traversing access nodes of the telecommunication system. The routing tables may be updated more often for addresses of the second group than for addresses of the first group. Thereby, the updating load (signaling necessary for the updating) for the routing tables also depends on the address selection and the updating load may be decreased by using lower address persistency for services that can tolerate latencies evoked by address re-assignment. The method may further comprise re-assigning addresses of the telecommunication system for mobile devices traversing access nodes of the telecommunication system. The addresses from the first group are re-assigned more often than addresses of the second group.

The telecommunication system may comprise a cellular mobile communication system. In further examples the telecommunication system further comprises a wired network with Wireless Local Area Network, WLAN, access nodes. The method further comprises maintaining the second address for the second service when the mobile device changes between a WLAN access node and an access node of the mobile communication system. Thereby, address persistency may extend across multiple access technologies.

A further example is a computer program having a program code for performing one of the methods described herein, when the computer program is executed on a computer, a processor, or a programmable hardware component.

Yet another example is an apparatus for a telecommunication system. The apparatus comprises one or more interfaces configured to communicate in the telecommunication system. The apparatus further comprises one or more processing devices configured to perform one of the methods described herein. The apparatus may be comprised in a mobile device or a network node of the telecommunication system. In examples the apparatus may be comprised in user equipment, UE, an access network (AN, e.g. a Radio AN) node or a core network (CN) node of the telecommunication system. Hence, another example in a telecommunication system, which comprises at least one such apparatus.

### Brief description of the Figures

Some examples of apparatuses, methods, and/or computer programs will be described in the following by way of example only, and with reference to the accompanying figures, in which
Fig. 1 shows a flowchart of an example of a method for using dynamic addressing for mobile devices in a telecommunication system;
Fig. 2 illustrates a block diagram of an example of an apparatus for using dynamic addressing for mobile devices in a telecommunication system; and
Fig. 3 depicts an implementation of a hierarchical routing topology in an example.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

In general, a telecommunication system refers to a complex network of devices, technologies, and protocols designed to enable the transmission of information over distances. This system facilitates the exchange of data, voice, video, and other forms of communication between users, typically through wired or wireless means. Key components of a telecommunication system include transmission media (like fiber optics or radio waves), switching and routing devices (such as routers and base stations), and end-user devices (like smartphones, computers, and servers). The system operates through various layers of protocols that ensure reliable, secure, and efficient communication, whether for personal, business, or governmental use. These systems are integral to modern society, supporting services such as mobile communication, internet access, satellite transmission, and broadcasting, enabling global connectivity and access to information.

A network node in a telecommunication system refers to any active, physical or logical device that is responsible for creating, receiving, or transmitting data within a network. These nodes serve as critical points of communication and data transfer, enabling the flow of information across the network. Examples of network nodes include routers, switches, base stations, servers, and user devices like smartphones and computers. Each node plays a specific role, such as directing data traffic, managing network connections, or handling user requests. In a telecommunications system, network nodes are interconnected, often forming a complex mesh that allows for efficient, scalable communication between multiple devices. These nodes can operate on different layers of the OSI (Open Systems Interconnection) model, from physical infrastructure to application services, and are essential for maintaining the integrity, speed, and reliability of communication networks.

Addressing in telecommunication networks is a foundational aspect that ensures data is efficiently routed and delivered across diverse devices and platforms. In these systems, unique identifiers - whether they be IP addresses in the internet or specialized identifiers in cellular and satellite communications - play a critical role in managing network traffic and facilitating secure, accurate communication between endpoints. This addressing framework not only supports the hierarchical structuring of networks, allowing for scalability and ease of management, but also adapts dynamically to changes, such as device mobility and network expansion. With ongoing advancements in network technology, the continuous evolution of addressing schemes remains essential, as they underpin both the robustness and the seamless interoperability required for modern, high-speed telecommunication infrastructures.

As outlined above, when devices change access nodes in telecommunication systems there are mainly two options for the address assigned to said device. Either the device keeps its address, which requires re-routing of packets with that address in the telecommunication system to assure that the packet with the maintained address routes through the new access node, or a new address is assigned, which means that some control plane communication or signaling needs be carried out to release the old address and assign a new address. Adress re-assignment can be assumed to consume more time than routing table updates. Using more persistent addresses therefore seem appropriate for services that are vulnerable to interruptions. In the following examples will be described that make used of addresses from address groups, which are pre-assigned based on address persistency.

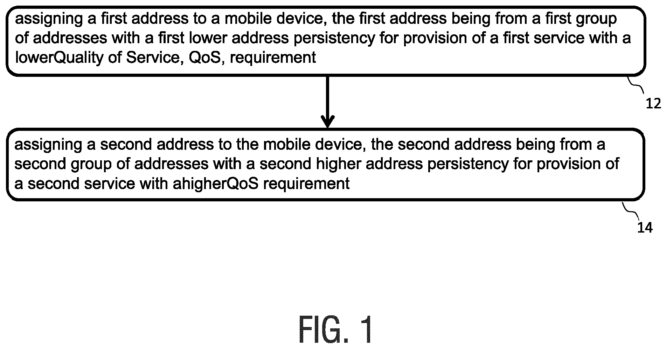

Fig. 1 shows a flowchart of an example of a method 10 for using dynamic addressing for mobile devices in a telecommunication system. The method 10 comprises assigning 12 a first address to a mobile device. The first address is from a first group of addresses with a first lower address persistency for provision of a first service with a lower Quality of Service, QoS, requirement. For example, the QoS requirement of the first service may indicate a higher latency or interruption tolerance. The method 10 further comprises assigning 14 a second address to the mobile device. The second address is from a second group of addresses with a second higher address persistency for provision of a second service with a higher QoS requirement. For example, the QoS requirement of the second service may indicate a lower latency or interruption tolerance. The first lower address persistency may indicate that the first address has to be changed more often than the second address when a mobile device changes between access nodes of the telecommunication system. The method 10 may be carried out at a mobile device. In this case the assigning steps 12, 14 means that the mobile device carries out according signaling steps that enable the assignment, e.g. assignment in interaction with another network node (e.g. through DHCP) or in interaction with a control interface. The method 10 may as well be carried out by a network node comprises in an infrastructure or wired part of the telecommunication system, such as a control node that carries out DHCP or any other address assignment procedure.

QoS requirements in telecommunication networks can be defined by a set of parameters that ensure data is transmitted efficiently and reliably across the network. These parameters include one or more elements of the group of latency, which measures the delay in data transmission; jitter, the variation in packet delay; bandwidth or data rate, the capacity of the network to handle data; or packet loss, the percentage of data packets that fail to reach their destination. Additionally, factors such as error rate and network reliability are critical in assessing overall performance. Together, these metrics help to prioritize traffic, ensure uninterrupted service for real-time applications like voice and video, and maintain a high standard of user experience even under varying network loads. QoS requirements may therefore be determining for a persistency requirement of an address used for a device consuming such a service.

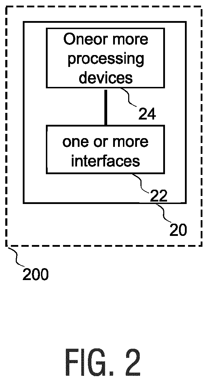

Fig. 2 illustrates a block diagram of an example of an apparatus 20 for using dynamic addressing for mobile devices in a telecommunication system. The apparatus 20 comprises one or more interfaces 22 configured to communicate in the telecommunication system. The one or more interfaces 22 are coupled to one or more processing devices 24. The one or more processing devices 24 are configured to perform one of the methods 10 as described herein. Fig. 2 also illustrates an example of a network node 200 comprising the apparatus 20. Such a network node 200 may be a mobile device or any network node (infrastructure or wired node) of the telecommunication system.

As illustrated in Fig. 2, the respective one or more processing devices 24 are coupled to the one or more interfaces 22. The one or more interfaces 22 may correspond and/or be associated to one or more inputs and/or outputs for receiving and/or transmitting information, which may be in digital (bit) values according to a specified code or protocol, within a module, between modules or between modules of different entities. For example, an interface 22 may comprise interface circuitry configured to receive and/or transmit information. In examples an interface 22 may correspond to any means for obtaining, receiving, transmitting or providing analog or digital signals or information, e.g., any connector, contact, pin, register, input port, output port, conductor, lane, logical endpoint, especially based on internet protocol, IP, especially exposing an IP port and/or an API (Application Programming Interface); etc., as well as any abstraction thereof, especially based on virtualization, containerization, service abstraction, proxying, load-balancing, network address translation (NAT), cloud computing and/or serverless computing; which allows providing or obtaining a signal or information.

An interface 22 may be configured to communicate (transmit, receive, or both) in a wireless or wireline manner and it may be configured to communicate, i.e., transmit and/or receive signals, information with further internal or external components. The one or more interfaces 22 may comprise further components to enable communication in a (mobile) communication system or network, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. Moreover, the one or more interfaces may be APIs in some examples. Moreover, the one or more interfaces may be logical transmission channels within a processing device or between processing devices, especially a signaling channel.

The one or more processing devices 24 may be implemented using one or more processing units, one or more circuitries, any means for processing, such as a processor, a computer or a programmable hardware component being operable with accordingly adapted software. In other words, the described function of the one or more processing devices 24 may as well be implemented in software, which is then executed on one or more programmable hardware components. Such hardware components may comprise a general-purpose processor, a Digital Signal Processor (DSP), a micro-controller, etc. and/or an abstraction thereof.

In examples a network entity or node may be any network node in a Radio Access Network (RAN), a Core Network (CN), or any node of any telecommunications system. For example, a network entity may generate cells of a cellular system. A network entity may correspond to a remote radio head, a transmission point, an access point, a macro cell, a small cell, a micro cell, a pico cell, a femto cell, a metro cell etc. The term small cell may refer to any cell smaller than a macro cell, e.g., a micro cell, a pico cell, a femto cell, or a metro cell. Moreover, a femto cell is considered smaller than a pico cell, which is considered smaller than a micro cell. A network entity can be a wireless interface of a wired network, which enables transmission and reception of radio signals to a communication device, e.g. a base station or access point. Such a radio signal may comply with radio signals as, for example, standardized by 3GPP or, generally, in line with one or more of the above listed systems. Thus, a network entity may be a base station and may correspond to, a NodeB, an eNodeB, an ngNB, a gNB, a BTS (Base Transceiver Station), an access point, all of which may be implemented in a satellite, plane, etc.

The telecommunication system 300 may hence be cellular. The term cell refers to a coverage area of radio services provided by a transmission point, a remote unit, a remote head, a remote radio head, communication device, network entity or a NodeB, an eNodeB, an ngNB, a gNB, a beam, a satellite, respectively. In general, a device, mobile device, or UE may be a communication device or network node that is capable of communicating wirelessly. In particular, however, the communication device may be a mobile communication device, e.g., a communication device that may be suitable for being carried around by a user. For example, the communication device may be a User Terminal (UT) or User Equipment (UE) within the meaning of the respective communication standards being used for mobile communication. For example, the communication device may be a mobile phone, such as a smartphone, or another type of mobile communication device, such as a computer, a smartwatch, a laptop computer, a tablet computer, etc. The communication device may be in a vehicle, a car, a bus, a truck, a construction and/or agricultural machinery, a train, an airplane, a boat, a ship, a cruise ship, an Internet of Things (IoT) device, a logistics application, etc.

In general, the (mobile) telecommunication system may, for example, correspond to one of the Third Generation Partnership Project (3GPP)-standardized mobile communication networks, where the term mobile communication system is used synonymously to mobile communication network. In further examples the telecommunication system could also be an IEEE (Institute of Electrical and Electronics Engineers) based technology or any other technology coming up in the future. The mobile communication system may correspond to, for example, a 6th Generation system (6G), a 5th Generation system (5G), a New Radio (NR) system, a Long-Term Evolution (LTE, 4G), an LTE-Advanced (LTE-A), High Speed Packet Access (HSPA), a Universal Mobile Tele-communication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc. Further network entities or nodes are those comprised in a core network of the mobile communication system 300, as will be outlined in more details subsequently.

A mobile communication system is a type of telecommunication infrastructure that allows users to transmit voice, data, and multimedia services wirelessly while on the move. This system operates through a network of interconnected components, including mobile devices (like smartphones and tablets), base stations (NodeBs, eNodeBs, gNodeBs), and core network elements, facilitating seamless communication across wide geographic areas. Mobile communication systems use radio frequencies to establish connections between mobile devices and base stations, which in turn connect to the broader public or private networks, such as the internet or telephony systems. Modern mobile communication systems are based on technologies like 4G LTE (Long Term Evolution) and 5G, which provide high-speed data transfer, low latency, and improved connectivity. These systems enable various services, including voice calls, text messaging, video streaming, and inter-net access, making them integral to personal, commercial, and industrial communication in to-day's interconnected world.

More details can be found in the 3GPP Technical Specifications (TS), e.g.

3GPP TS 23.501 V19.2.1 (2025-01), System Architecture for the 5G System (5GS), and 3GPP TS 23.502 V19.2.0 (2024-12), Procedures for the 5G System.

The systems specified by 3GPP are complex and the full set of specifications extends over thousands of pages. In the following some examples will be detailed that interact with or can be comprised in 3GPP systems. With respect to further details on technical aspects related to these systems beyond those described subsequently, it is referred to the 3GPP specifications.

As outline above, in conventional networks a mobility anchor may be used to provide address persistency. A mobility anchor in telecommunication networks serves as a pivotal node that maintains seamless connectivity for mobile users as they transition across different network segments. By anchoring a mobile device's IP address and session data, it enables uninterrupted communication even when the device moves between various points of attachment (access nodes) within the network. Some parameters of a mobility anchor may include its latency, which affects the speed of handover and overall network responsiveness; its reliability, ensuring continuous service without frequent dropouts; and its scalability, which allows it to manage a growing number of mobile sessions efficiently. Additionally, the mobility anchor may support robust tunneling mechanisms for secure and efficient data encapsulation, as well as dynamic address mapping to accommodate frequent network changes. Tunneling is one way among others to achieve seamless. These attributes collectively ensure that the mobility anchor plays an essential role in delivering a high-quality, uninterrupted user experience in modern telecommunication environments.

The complexity of the mobility anchor, particularly in terms of signaling overhead, is a significant challenge in the realm of terminal mobility. As mobile terminals traverse different network cells, the mobility anchor must manage numerous signaling exchanges to maintain session continuity. Each handover event triggers a sequence of signaling messages that update the user's location, reconfigure routing paths, and ensure that the IP address remains constant. This signaling process involves multiple network entities, including the base stations, access gateways, and the User Plane Function (UPF) itself. The overhead generated by these signaling exchanges can impact network performance, especially in scenarios with high mobility or dense user populations. The signaling load increases proportionally with the frequency of handovers, which can lead to higher latency and reduced throughput if not managed efficiently.

However, it is important to note that not all services within a mobile network ecosystem necessitate seamless mobility. Certain applications and services can tolerate brief interruptions or re-establish connections (in higher layers as like the transport protocol or application layer) quickly without significantly impacting user experience. For instance, non-real-time applications such as email, file downloads, or asynchronous messaging do not require continuous connectivity and can resume operations without major disruptions after a brief pause.

Moreover, there are numerous scenarios where terminals are either stationary or exhibit very limited mobility. Devices such as loT sensors, smart home appliances, or fixed wireless terminals often remain in one location or move infrequently. In such cases, the need for complex mobility management and seamless handovers is minimized, as these terminals do not frequently switch between network cells. Network resources can be optimized by prioritizing seamless mobility solutions for high-mobility scenarios while simplifying the handling of stationary or low-mobility devices. This approach ensures efficient resource allocation and enhances overall network performance.

Future networks are expected to offer different levels of persistency and mobility support. IP addresses could be used to differentiate between these levels, e.g. each IPv6 address assigned to the terminal is designed to support a different level of mobility. At least in some examples, the first and second groups of addresses comprise IPv6 addresses.

For example, one address might be highly persistent, ensuring seamless connectivity and minimal disruption during handovers, making it ideal for real-time applications such as VoIP (Voice over IP) or video conferencing. Another address may have a lower level of persistency, suitable for applications that can tolerate brief interruptions, such as web browsing or email.

By selecting the appropriate IPv6 address for communication with application servers, both the terminal and the application can dynamically choose the necessary level of mobility support from the network. This selection could be based on the specific requirements of the application, the current mobility state (mobility demand) of the terminal, or network conditions. For instance, a terminal engaged in a real-time video call would use the highly persistent address to maintain continuous connectivity, while a file download might use a less persistent address to optimize resource usage.

Conversely, for devices that demand seamless mobility, such as smartphones or tablets used for real-time applications like VoIP or video conferencing, both high and low persistency addresses can be assigned. The method 10 may further include assigning one or more addresses of the first group and one or more addresses of the second group of addresses to a mobile device for use of different services with different interruption tolerances. For example, the method includes using an address of the first group for a background or non-conversational service and using an address of the second group for a gaming or conversational service. This allows the terminal to dynamically select the IPv6 address that matches the mobility requirements of the current application and network conditions. The issue with this is how do terminals as well as the network know to which persistency level a certain IPv6 address belongs to.

On of the key ideas of the present disclosure is to encode the persistency level directly within the structure of the IPv6 address itself. The first and second addresses may comprise one or more indicators of the address group the first the second addresses belong to. For example, the indicator uses one or more digits of the addresses. By designating specific bits within the address to represent different levels of mobility persistency, the network can easily identify and manage varying degrees of mobility support required by different applications and devices. For instance, an IPv6 address could include a dedicated segment where certain bit patterns correspond to high persistency, ensuring seamless connectivity, while other bit patterns indicate low persistency, suitable for applications that can accommodate brief interruptions.

This encoding allows for a straightforward and efficient method to dynamically allocate appropriate resources based on the terminal's needs and the application's sensitivity to mobility disruptions. Therefore, in some examples the method 10 further comprises determining a mobility demand of an application of a mobile device and using addresses from the first and second groups of addresses based on the mobility demand of the application.

Moreover, this approach facilitates packet treatment in the network according to the persistency level. An IPv6 address is a 128-bit address divided into eight groups of 16 bits each, written in hexadecimal notation and separated by colons (:). Each group represents 16 bits, or four hexadecimal digits. For example, an IPv6 address might look like this:
2001:0db8:85a3:0000:0000:8a2e:0370:7334.

IPv6 addresses are typically accompanied by a prefix length (e.g., /64), which specifies the network portion of the address. The address is divided into two parts: the network part and the host part. The network part identifies the network segment and is commonly the first 64 bits, while the host part identifies the unique host within the network and occupies the remaining bits.

The host part can be configured in several ways:
- Manually configured: A static address assigned by the network administrator.
- Automatically generated:
   ∘ EUI-64 (64-Bit Extended Unique Identifier): Derived from the device's MAC (Medium Access Control) address, embedding it into the lower 64 bits.
   ∘ Privacy extensions: Generate random host parts to enhance privacy and avoid device tracking.
- DHCPv6 (Dynamic Host Configuration Protocol version 6): Obtained from a DHCPv6 server. A DHCPv6 server can assign an IPv6 address, including the host part, dynamically. The server ensures uniqueness and may use random, sequential values or EUI-64 values for the host part.

It's important to ensure that the host part is unique within the same network prefix to avoid address conflicts.

The persistency level can be encoded in the host and network part of the IPv6 address. Constructing the host part of an IPv6 address involves generating a unique identifier for the host within the network. This process depends on the configuration method chosen (manual, automatic, or based on specific rules).

The host part can be used to encode the persistency level into an IPv6 address. For example, bits 89 - 96 can be used to encode the persistency level:
NNNN:NNNN:NNNN:NNNN:HH**HH**:HHHH:HHHH:HHHH.

This approach can be used for manual configured host part, as well as the IPv6 address assignment via DHCPv6. In these cases, the network operator keeps control about the assigned IP addresses. It is also compliant with the EUI-64 format in case the DHCPv6 server uses this method.

IPv6 supports flexible subnetting to allocate addresses efficiently. Commonly, organizations use a /48 prefix for the network part, dividing it further into /64 subnets. Example:
- Network: 2001:db8::/48.
- Subnets:
   ∘ 2001:db8:0:1::/64,
   ∘ 2001:db8:0:2::/64.

Hence, organizations have a huge number of subnets available and could therefore encode the persistency level also within the network part of the IPv6 address. That basically means, that a subnet always is linked with a certain persistency level.

For example, bits 57 - 64 are used to encode the persistency level:
NNNN:NNNN:NNNN:NN**NN**:HHHH:HHHH:HHHH:HHHH.

This approach is also compliant with the automatically generated IPv6 addresses. Operators simply have to announce the different subnets associated to the different persistency levels, e.g. via router advertisement messages.

An example of how to implement the persistency level in the networking part is described below and requires the following aspects:
1. Global unicast addressing: At the top layer, IPv6 global unicast addresses are used to identify networks uniquely across the globe.
2. Subnetting: Below the global unicast addressing, the network is divided into subnets. Each subnet is identified by a subnet prefix, which is a combination of the global prefix and additional bits that specify the subnet. This allows for logical and efficient segmentation of the network into smaller, manageable sections.
3. Hierarchical routing: Routing within a hierarchical IPv6 network is optimized through aggregation. Subnet prefixes are aggregated to reduce the size of the routing tables, enabling faster and more efficient routing. Routers at each level of the hierarchy use these aggregated prefixes to forward packets to the appropriate subnet without needing detailed information about every individual address.
4. Address allocation: Within each subnet, IPv6 addresses are allocated to devices using Dynamic Host Configuration Protocol for IPv6 (DHCPv6). Each terminal is assigned several IP addresses. Each with a different level of mobility support.

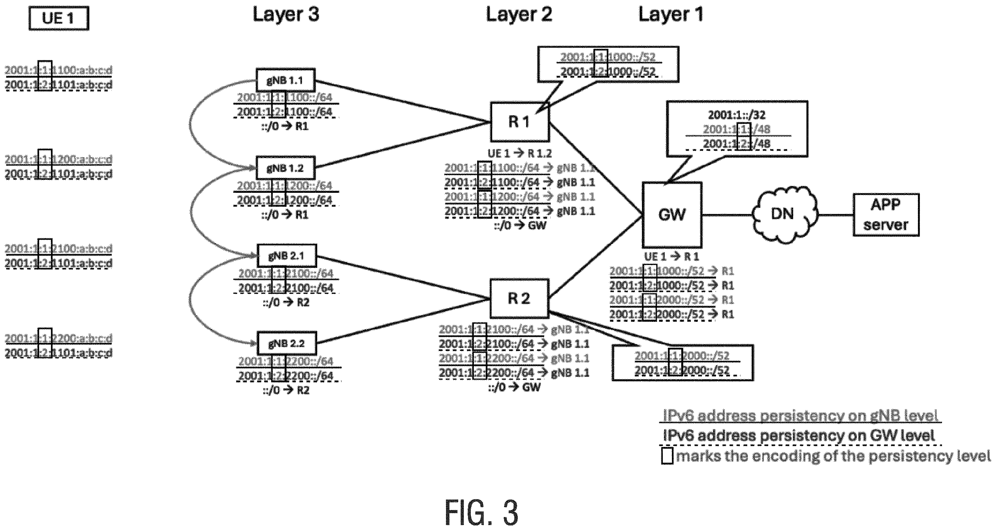

Fig. 3 shows an example of the implementation in a hierarchical routing topology. The tele-communication system comprises a cellular mobile communication system, with gNBs as access nodes and a gateway GW to a data network DN.

Two persistency cases are considered:
(1) IPv6 address persistency at gNB level (solid underlining), and
(2) IPv6 address persistency at GW level (dotted underlining).

The encoding of the persistency level is marked by the boxes in the addresses in Fig. 3. The example considers three hierarchical layers, named as Layer 3 (gNBs 1.1, 1.2, 2.1, 2.2, access nodes), Layer 2 (routers R1, R2), and Layer 1 (Gateway GW). Fig. 3 shows a UE (UE1) on the left that uses a service of an application server (APP server), which is shown on the right. The application server connects to a data network (DN) or network cloud. Access to the UE is provided via gateway GW and via Layers 1, 2, and 3.

Layer 1 represents the topmost layer in the hierarchy and is responsible for the global unicast address assigned to the entire network. This layer uniquely identifies the network across the globe. For example, the global unicast address for the network could be: 2001:1::/32, This address serves as the global prefix for the entire organization's network. This global unicast address is divided in two subnets. One subnet for each persistency case called the persistency subnets:
- Low persistency subnet: 2001:1:1::/48
- High persistency subnet: 2001:1:2::/48

Layer 2 involves dividing the persistency subnets into subnets per router (R1, R2). Each router in layer 2 is assigned a unique subnet prefix, which is derived from the respective persistency subnet with additional bits to specify the region. For the two routers in Layer 2, the following subnets are applied:
- Router 1 (R 1): 2001:1:1:1000::/52 and 2001:1:2:1000::/52
- Router 2 (R 2): 2001:1:1:2000::/52 and 2001:1:2:2000::/52

Layer 3 is the lowest layer in the hierarchy and is responsible for assigning IPv6 addresses to individual devices within each local subnet. Therefore, the gNBs in this layer are configured each with an own subnet and each UE within a local subnet receives an IPv6 address, ensuring unique identification and communication capabilities. Each device will be configured with an IPv6 address for each persistency case:
- UE 1 connected to gNB 1.1:
   ∘ 2001:1:1:1100:a:b:c:d low persistency address
   ∘ 2001:1:2:1100:a:b:c:d high persistency address

From the Fig. 3 it can be seen when UE 1 handovers between the gNBs that its low persistent IPv6 address (solid underlining) is changing while the high persistent IPv6 address (dotted underlining) stays the same. For the high persistent case the UE gets an IPv6 address from the gNB to which the initial connection happened (gNB 1.1 in the above example). This IP address stays the same during all handovers.

It is essential to detect handovers of the UE and to change the routing tables in the transport network such that the packets can be correctly routed to/from the UE. An example of host specific routing entries is shown in the example for UE 1, which initially attached to gNB 1.1 and afterwards handovered to gNB 1.2.

The network architecture intelligently distinguishes between low persistency and high persistency IP addresses. When a UE handover occurs between gNBs, the system evaluates which IP addresses require updates in the transport network's routing tables. Specifically, it identifies that only the high persistency IPv6 addresses necessitate routing adjustments. In this case the method 10 comprises updating routing tables (in Layer 2 and/or Layer 3) of the telecommunication system for mobile devices (UE) traversing access nodes (gNBs) of the telecommunication system. The UE may then keep its IPv6 address when handing over between gNBs. The routing tables are updated more often for addresses of the second group (high persistency) than for addresses of the first group (low persistency). Conversely, the low persistency IPv6 addresses, which change between handovers, do not require such updates. In this case the method 10 comprises re-assigning addresses of the telecommunication system for mobile devices (UE) traversing access nodes (gNBs) of the telecommunication system. The addresses from the first group (low persistency) are re-assigned more often than addresses of the second group (high persistency).

Please note that these routing table updates are only done in case that the persistent IP address is part of an active connection. This selective update mechanism reduces or even minimizes signaling overhead.

Fig. 3 illustrates an example in a mobile communication system. However, in further examples the telecommunication system may further comprise a wired network with Wireless Local Area Network, WLAN, access node. The method 10 then further comprises maintaining the second address for the second service when the mobile device changes between a WLAN access node and an access node of the mobile communication system. That way, the second address group may have address persistency across multiple access technologies. Hence, in the hierarchy there is a layer covering multiple access technologies and routing table updates may be carried out at a routing entity that has capability of routing the packets to access nodes of different access technologies.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (10) for using dynamic addressing for mobile devices in a telecommunication system, the method (10) comprising
assigning (12) a first address to a mobile device, the first address being from a first group of addresses with a first lower address persistency for provision of a first service with a lower Quality of Service, QoS, requirement, and
assigning (14) a second address to the mobile device, the second address being from a second group of addresses with a second higher address persistency for provision of a second service with a higher QoS requirement.

2. The method (10) of claim 1, wherein the first lower address persistency indicates that the first address has to be changed more often than the second address when a mobile device changes between access nodes of the telecommunication system.

3. The method (10) of one of the claims 1 or 2, wherein the first and second groups of addresses comprise IPv6 addresses.

4. The method (10) of one of the claims 1 to 3, wherein the first and second addresses comprise one or more indicators of the address group the first the second addresses belong to.

5. The method (10) of claim 4, wherein the indicator uses one or more digits of the addresses.

6. The method (10) of one of the claims 1 to 5, further comprising determining a mobility demand of an application of a mobile device and using addresses from the first and second groups of addresses based on the mobility demand of the application.

7. The method (10) of one of the claims 1 to 6, further comprising assigning one or more addresses of the first group and one or more addresses of the second group of addresses to a mobile device for use of different services with different interruption tolerances.

8. The method (10) of one of the claims 1 to 7, further comprising using an address of the first group for a background or non-conversational service and using an address of the second group for a gaming or conversational service.

9. The method (10) of one of the claims 1 to 8, further comprising updating routing tables of the telecommunication system for mobile devices traversing access nodes of the telecommunication system, wherein the routing tables are updated more often for addresses of the second group than for addresses of the first group.

10. The method (10) of one of the claims 1 to 9, further comprising re-assigning addresses of the telecommunication system for mobile devices traversing access nodes of the telecommunication system, wherein the addresses from the first group are re-assigned more often than addresses of the second group.

11. The method (10) of one of the claims 1 to 10, wherein the telecommunication system comprises a cellular mobile communication system.

12. The method (10) of claim 11, wherein the telecommunication system further comprises a wired network with Wireless Local Area Network, WLAN, access nodes and wherein the method further comprises maintaining the second address for the second service when the mobile device changes between a WLAN access node and an access node of the mobile communication system.

13. A computer program having a program code for performing one of the methods (10) of one of the claims 1 to 12, when the computer program is executed on a computer, a processor, or a programmable hardware component.

14. An apparatus (20) for a telecommunication system, the apparatus comprising
one or more interfaces (22) configured to communicate in the telecommunication system; and
one or more processing devices (24) configured to perform one of the methods (10) of one of the claims 1 to 12.

15. The apparatus of claim 14, being comprised in a mobile device or a network node of the telecommunication system.

## Amended claims

### Amended claims in accordance with Rule 137(2) EPC.

1. A method (10) for using dynamic addressing for mobile devices in a telecommunication system, the method (10) comprising
assigning (12) a first address to a mobile device, the first address being from a first group of addresses with a first lower address persistency for provision of a first service with a lower Quality of Service, QoS, requirement, and
assigning (14) a second address to the mobile device, the second address being from a second group of addresses with a second higher address persistency for provision of a second service with a higher QoS requirement, wherein the first and second addresses comprise one or more indicators of the address group the first the second addresses belong to and wherein the indicator uses one or more digits of the addresses, wherein the first lower address persistency indicates that the first address has to be changed more often than the second address when a mobile device changes between access nodes of the telecommunication system.

2. The method (10) of claim 1, wherein the first and second groups of addresses comprise IPv6 addresses.

3. The method (10) of one of the claims 1 or 2, further comprising determining a mobility demand of an application of a mobile device and using addresses from the first and second groups of addresses based on the mobility demand of the application.

4. The method (10) of one of the claims 1 to 3, further comprising assigning one or more addresses of the first group and one or more addresses of the second group of addresses to a mobile device for use of different services with different interruption tolerances.

5. The method (10) of one of the claims 1 to 4, further comprising using an address of the first group for a background or non-conversational service and using an address of the second group for a gaming or conversational service.

6. The method (10) of one of the claims 1 to 5, further comprising updating routing paths of the telecommunication system for mobile devices traversing access nodes of the telecommunication system, wherein the routing paths are updated more often for addresses of the second group than for addresses of the first group.

7. The method (10) of one of the claims 1 to 6, further comprising re-assigning addresses of the telecommunication system for mobile devices traversing access nodes of the telecommunication system, wherein the addresses from the first group are re-assigned more often than addresses of the second group.

8. The method (10) of one of the claims 1 to 7, wherein the telecommunication system comprises a cellular mobile communication system.

9. The method (10) of claim 8, wherein the telecommunication system further comprises a wired network with Wireless Local Area Network, WLAN, access nodes and wherein the method further comprises maintaining the second address for the second service when the mobile device changes between a WLAN access node and an access node of the mobile communication system.

10. A computer program having a program code for performing one of the methods (10) of one of the claims 1 to 9, when the computer program is executed on a computer, a processor, or a programmable hardware component.

11. An apparatus (20) for a telecommunication system, the apparatus comprising one or more interfaces (22) configured to communicate in the telecommunication system; and one or more processing devices (24) configured to perform one of the methods (10) of one of the claims 1 to 9.

12. The apparatus of claim 11, being comprised in a mobile device or a network node of the telecommunication system.
